Europäisches Patentamt

**European Patent Office**

Office européen des brevets

(19)

(11) Publication number: **0 077 476**

**A2**

(12)

# EUROPEAN PATENT APPLICATION

(21) Application number: **82108898.6**

(22) Date of filing: **03.07.79**

(51) Int. Cl.³: **B 23 P 15/02**

(30) Priority: **11.07.78 US 923693**

(43) Date of publication of application:
**27.04.83 Bulletin 83/17**

(84) Designated Contracting States:
**BE CH DE FR GB NL SE**

(60) Publication number of the earlier application
in accordance with Art. 76 EPC: **0 007 207**

(71) Applicant: **TRW INC.**
**One Space Park Building E2/8000**
**Redondo Beach California 90278(US)**

(72) Inventor: **Derkacs, Thomas**
**6786 Seneca Drive**
**Mayfield Ohio 44143(US)**

(72) Inventor: **Fetheroff, Charles Walter**
**30612 Ronald Drive**
**Willowick Ohio 44094(US)**

(72) Inventor: **Matay, Istvan Mihaly**
**8943 State Road**
**North Royalton Ohio 44133(US)**

(72) Inventor: **Toth, Istvan Jozsef**
**25869 Euclid-Chagrin Parkway**
**Richmond Heights Ohio 44143(US)**

(74) Representative: **Abbie, Andrew Kenneth et al,**
**A.A. THORNTON & CO. Northumberland House 303/306**
**High Holborn**
**London, WC1V 7LE(GB)**

(54) **Airfoil having an internal space and method of forming same.**

(57) In order to form an airfoil 284 having an internal space between its major side surfaces 290,292, material is sprayed onto a core having a configuration corresponding to the configuration of the internal space and thereafter the core is removed.

FIG. 4

EP 0 077 476 A2

- 1 -

Airfoil having an internal space and
method of forming same

This invention relates to an airfoil having
an internal space and a method of forming same.

Reference is hereby directed to our Application
No. 79301288.1 (Publication No. 7207) from which the
present application is divided, and which discloses
a method and apparatus for applying a covering to a
workpiece.

Briefly, the apparatus disclosed in the above-
mentioned application includes a plasma spray gun
which is utilized to direct a flow of material toward
a workpiece, such as an airfoil. A sensor assembly
is provided to determine the thickness of the covering applied to the workpiece without engaging the
workpiece. A control assembly is connected with the
sensor assembly and the spray gun. The control
assembly is effective to compare the thickness of
the covering of material which is actually applied
to the workpiece with a desired thickness and is effective to regulate the operation of the spray gun in such a manner as to effect the application to the workpiece of a covering having the desired thickness.

Although it is contemplated that many different types of sensor assemblies could be utilized in association with the plasma spray gun to determine the thickness of the covering applied to the workpiece, an optical sensor assembly is advantageously utilized.

It is possible to control the operation of the plasma spray gun to apply a covering which will have a thickness which is within 1.5 mils (0.0381 mm) of a desired thickness. The accurate application of the covering to the workpiece is promoted by detecting the thickness of the covering at several different points on the workpiece and controlling the operation of the plasma spray gun as a function of differences between the desired covering thickness and the actual covering thickness as sensed at several points on the workpiece.

The application of a covering of the desired thickness to the workpiece is further promoted by applying the covering in layers formed of longitudinally extending strips. The central axes of the strips in one layer may be offset from the central axes of the strip of a next adjacent layer for more precise control of overall thickness uniformity.

The accurate application of the covering is greatly promoted by utilizing a drive apparatus having six degrees of freedom of relative movement. Thus, the apparatus can effect relative movement between the workpiece and a spray gun along three different axes. In addition the apparatus can effect rotational movement between the workpiece and the spray gun about three axes.

The present invention concerns an application of the method and apparatus disclosed in the above-mentioned application in which an airfoil is formed on a workpiece or core which is subsequently removed from the airfoil to leave an internal space therein.

The present invention includes a method of forming an airfoil with an internal space between its major side surfaces, comprising providing a core having a configuration corresponding to the configuration of the internal space operating a spray means to spray material onto the core to form said major side surfaces and thereafter removing said core to leave said space in the airfoil between said major side surfaces.

The present invention also includes an airfoil having an internal space between its major side surfaces, said airfoil being formed by providing a core, forming said major side surfaces by operating a spray means to direct a flow of material toward said core, and, thereafter, removing the core to leave a space inside the airfoil between the major side surfaces.

In order that the invention may be well understood, an embodiment thereof, which is given by way of example only, will now be described, reference being made to the accompanying drawings, in which:

Figure 1 is a pictorial illustration of a core or workpiece which is utilized as a base in the making of an airfoil;

Figure 2 is a sectional view through the core after a plurality of layers of material have been applied to the core;

Figure 3 is a sectional view, generally similar to Figure 2, illustrating the relationship between a protective coating applied over the layers of Figure 2 and the core;

Figure 4 is a sectional view, generally similar to Figure 3, illustrating the airfoil with the core removed; and

Figure 5 is a sectional view, generally similar to Figure 4, schematically illustrating the manner in which pressure is applied against the airfoil to increase its density.

In fabricating an airfoil in accordance with the method illustrated in the drawings, a core 270 is provided. Although the core 270 does have a configuration which slightly resembles the configuration of an airfoil, it is contemplated that the core 270 could have any desired configuration. In the present instance the configuration of the core 270 was selected in order to provide an internal space defining passages of a desired configuration within the airfoil.

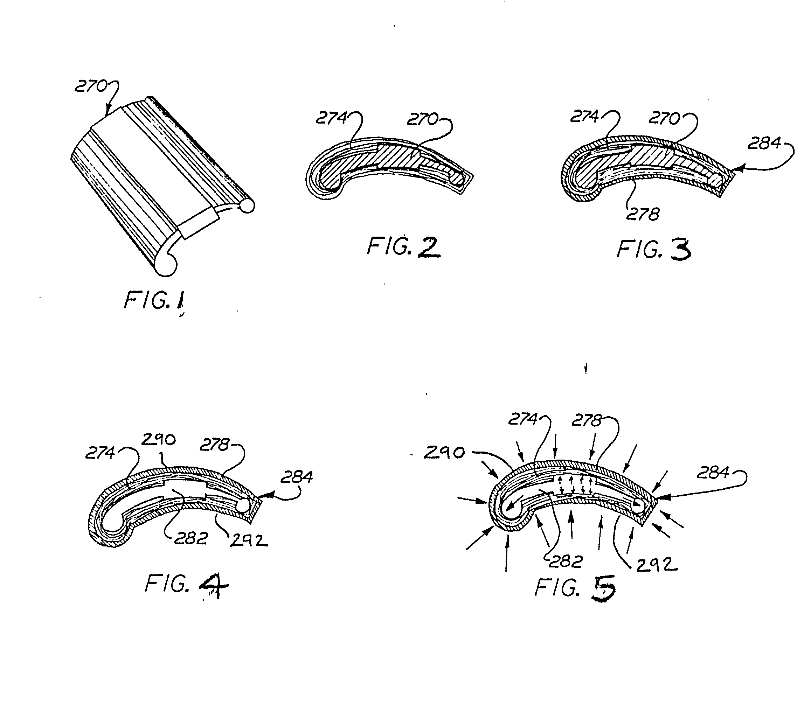

The apparatus disclosed in our Application No. 79301288.1 is operated to spray material onto the core 270 such that the covering applied to the core form an airfoil, having major side surfaces 290,292 (Figures 4 and 5). The core 270 is first covered with a plurality of non-uniform layers, which have been indicated at 274 in Figure 2, to form the basic configuration of an airfoil. It should be noted that the layers 274 are applied with the spray gun by making more scans or passes across areas where the material is relatively thick than across areas where the material is relatively thin. Reference locations corresponding to the location of many different points on the surface of the core 270 are stored in the microprocessor before the non-uniform covering 274 is applied.

By controlling the operation of the spray gun in the manner explained in the above-mentioned application, it is possible to accurately build up a non-uniform coating over the core 270. The thickness of the non-uniform coating will vary by less than plus or minus 1.5 mils (0.0.381 mm).

Once the body of the airfoil has been built up by the non-uniform covering 274, a thermal barrier covering 278 is applied over the non-uniform covering 274. The thermal barrier covering 278 is of a material which is different than the material of the covering 274 and may be provided with a bond coat or covering.

Once the thermal barrier covering 278 has been applied to the non-uniform covering 274, the core or base 270 is removed to provide an internal space 282 in the airfoil 284 (see Figure 4) between the major side surfaces 290,292. The hollow airfoil 284 is then subjected to hot isostatic pressing to increase the density of the airfoil 284 and to eliminate any porosity which may be present in the non-uniform coating 274.

The core 270 can be made of any material which does not adversely react with the non-uniform covering 274 and which is easily removed as by being melted out or leached. With one particular type of airfoil, the core 270 could advantageously be made of aluminium.

CLAIMS:

1.    A method of forming an airfoil (284) with an internal space (282) between its major side surfaces (290,292), comprising providing a core (270) having a configuration corresponding to the configuration of the internal space (282), operating a spray means to spray material onto the core to form said major side surfaces (290,292), and thereafter removing said core (270) to leave said space (282) in the airfoil between said major side surfaces.

2.    A method as claimed in claim 1, wherein said spray means is operated to provide a non-uniform coating (274) of material over said core (270).

3.    A method as claimed in claim 2, wherein said spray means is operated to apply a thermal barrier covering (278) over said non-uniform coating (274).

4.    A method as claimed in any one of the preceding claims wherein said material is applied to the core in layers.

5.    A method as claimed in claim 4, wherein each layer is applied in strips.

6.    A method as claimed in any one of the preceding claims, wherein after the core has been removed the airfoil is subjected to hot isostatic pressing to increase its density.

7.    An airfoil (284) having an internal space (282) between its major side surfaces (290,292), said airfoil being formed by providing a core (270), forming said major side surfaces (290,292) by operating a spray means to direct a flow of material toward said core (270), and, thereafter, removing the core (270) to leave a space (282) inside the airfoil between the major side surfaces.

270

FIG. 1

274    270

FIG. 2

274    270    284

278

FIG. 3

274    290    278    284

282    292

FIG. 4

274    278    290    284

282    292

FIG. 5

1/1

0077476